# EUROPÄISCHE PATENTSCHRIFT

(11) **EP 2 004 472 B1**
(45) Veröffentlichungstag und Bekanntmachung des Hinweises auf die Patenterteilung: **03.11.2010**
(21) Anmeldenummer: 07712090.5
(22) Anmeldetag: 24.01.2007
(51) Int. Cl.: B62D 1/184

(54) **VERSTELLBARE LENKSPINDELANORDNUNG**
ADJUSTABLE STEERING-SPINDLE ARRANGEMENT
AGENCEMENT D'ARBRE DE DIRECTION REGLABLE

(30) Priorität: 08.04.2006 DE 102006016675
(43) Veröffentlichungstag der Anmeldung: 24.12.2008
(73) Patentinhaber: ZF-Lenksysteme GmbH, 73527 Schwäbisch Gmünd (DE)
(72) Erfinder: HEINTSCHEL, Manfred, 73525 Schwäbisch Gmünd (DE); SEITZ, Gerhard, 73529 Schwäbisch Gmünd (DE)
(86) Internationale Anmeldenummer: PCT/EP2007/050702
(87) Internationale Veröffentlichungsnummer: WO 2007/115841

(56) Entgegenhaltungen:
- EP-A- 1 400 430
- EP-A1- 0 671 308
- US-A- 5 131 287

## Beschreibung

Die Erfindung betrifft eine verstellbare Lenkspindelanordnung für ein Fahrzeug mit einer Lenkspindel-Halteeinrichtung nach dem Oberbegriff des Anspruchs 1.

Nutzkraftwagen und Personenkraftwagen in besonderem Maße weisen verstellbare Anordnungen zur Veränderung und Festlegung der Position einer Lenkhandhabe mit einer Lenkspindel relativ zu einem Fahrer des Kraftwagens auf. Damit lässt sich die Höhe und die Neigung sowie der Abstand einer Lenkhandhabe zu dem Fahrer einstellen und feststellen.

Die DE 699 07 723 T2 beschreibt eine verstellbare Lenkspindelanordnung für ein Fahrzeug wobei eine Lenkspindel zwischen Plattenstapeln, die als reibschlüssige Kupplung zwischen einem fahrzeugfesten Bauteil und der Lenkspindel wirken, verdreht und verschoben werden kann um so ihre Position relativ zu einem Fahrer anzupassen. Mit Hilfe eines Arretiermodus wird die Lenkspindel zwischen den Plattenstapeln fixiert.

Die DE 690 02 33 T2 beschreibt eine verstellbare Lenkspindelanordnung für Kraftfahrzeuge mit einem Lenkrad, einer mit dem Lenkrad verbundenen Lenksäule, einer Lenkspindel-Halteeinrichtung in der die Lenksäule drehbar gelagert ist, und mit Hilfe dieser Lenkspindel- oder Lenksäulen-Halteeinrichtung die Lenkspindel im Fahrzeug über ein erstes und zweites federbelastetes Kupplungselement feststellbar ist. Die Lenkspindel-Halteeinrichtung ist über eine erste Drehachse schwenkbar angeordnet. Die Kupplungselemente bestehen aus einer ersten und zweiten Packung von dünnen Reibungsblechen, die abwechselnd mit der Lenkspindel-Halteeinrichtung und einem fahrzeugfesten Lagerbock verbunden sind. Eine Klemmvorrichtung, bestehend aus einem Federelement, dessen Federkraft die Packungen dünner Reibungsbleche zusammenzudrücken vermag und deren Klemmkraft durch eine mechanische Vorrichtung aus einem Hebel, welcher mittels eines Seilzugs betätigbar ist, überwindbar ist, ist vorgesehen um die Position der Lenkspindel oder der Lenkspindel-Halteeinrichtung zu variieren. Es bedarf entsprechend großer Reibflächen in den Packungen von dünnen Reibungsblechen und entsprechenden Bauraumbedarfs für diese Reibungsbleche.

Die US5131287 beschreibt eine verstellbare Lenkspindelanordnung gemäß dem Oberbegriff des Anspruchs 1. In dieser Anordnung wird die Kraft des Federelementes durch einen Hebel übersetzt.

Der Erfindung liegt die Aufgabe zugrunde, eine verstellbare Lenkspindelanordnung für ein Fahrzeug zu schaffen, deren Bauraumbedarf und deren Kosten minimiert sind.

Die Aufgabe wird mit einer verstellbaren Lenkspindelanordnung für ein Fahrzeug mit den Merkmalen des Anspruchs 1 gelöst.

Dadurch, dass die verstellbare Lenkspindelanordnung mit einem drehbar gelagerten Hebel zwischen dem Federelement und dem ersten Kupplungselement zwischen der Lenkspindel-Halteeinrichtung und dem Lagerbock versehen ist und der Hebel die Kraft des Federelementes übersetzt, ist eine wirksame konstruktive Maßnahme getroffen, um bei minimierten Klemmflächen und minimiertem Bauraum für das Federelement eine sichere Klemmwirkung zwischen der Lenkspindel-Halteeinrichtung und dem Lagerbock zu erzielen und den Bauraumbedarf und die Kosten für die verstellbare Lenkspindelanordnung zu minimieren.

Bevorzugte Ausführungen ergeben sich aus den Unteransprüchen.

In einer besonders bevorzugten Ausführungsform der erfindungsgemäßen verstellbaren Lenkspindelanordnung ist das Federelement eine Tellerfeder, deren degressive Federkennlinie dadurch ausgeglichen wird, dass der Hebel so aufgebaut oder gelagert ist, dass er die Kraft des Federelements, insbesondere die Kraft der Tellerfeder ungleichförmig übersetzt. Auf diese Weise lässt sich der Federkraft-Abfall bei zunehmendem Federweg des Federelements und umgekehrt ausgleichen und ein linearer oder, falls gewünscht, ein progressiver Verlauf der Federkennlinie (Federrate) des Federelements in Bezug auf dessen Wirkung auf das Kupplungselement ist dadurch ermöglicht.

Das Federelement ist zur Bauraumminimierung der Lenkspindelanordnung bevorzugt um eine Drehachse der Lenkspindel-Halteeinrichtung oder der Lenkspindel (nicht um deren Längsachse) angeordnet, und als Tellerfeder oder Gummifeder oder zylindrische Schraubenfeder ausgebildet. Der Hebel ist bevorzugt in axialer Richtung der Drehachse an einem Ende des Federelements angeordnet.

Zwischen dem Federelement und dem Hebel ist bevorzugt eine Spannscheibe oder ein Übertragungselement für die Federkraft auf den Hebel angeordnet, das in axialer Richtung zu der Drehachse und um die Drehachse beweglich gelagert ist. Auf der Spannscheibe gleitet der Hebel mit einer Auflagefläche ab und die Spannscheibe dient ferner dazu eine Kraft eines Stellers oder Stellmotors gegen die Kraft der Tellerfeder oder des Federelements aufzubringen um die Klemmwirkung zwischen der Lenkspindel-Halteeinrichtung und dem Lagerbock aufzuheben wodurch die Position der Lenkspindel verändert werden kann.

Der Steller ist in einem besonders bevorzugten Ausführungsbeispiel als Pneumatikzylinder ausgebildet, dessen Zylinder axial bewegbar in Relation zu der Drehachse der Lenkspindel-Halteeinrichtung ist, wobei der Zylinder bevorzugt über einen Bajonettverschluss mit der Spannscheibe verbunden ist.

Um eine punktsymmetrische Übertragung und Verstärkung der Kraft des Federelements auf das Kupplungselement zu ermöglichen sind bevorzugt zwei oder mehrere Hebel parallel geschaltet in tangentialer Richtung mit etwa gleichem Abstand zueinander um die Drehachse angeordnet und wirken gemeinsam auf das Kupplungselement. Die Hebel sind zu diesem Zweck an einem Hebelhalter zusammengefasst und jeweils einzeln drehbar gelagert daran gehalten. Der Hebelhalter ist relativ zu der Spannscheibe drehbar, sodaß im Betrieb der verstellbaren Lenkspindelanordnung die Hebel über die Fläche der Spannscheibe gleiten können und ständig ihren Auflagepunkt variieren können. Dadurch ist Verschleiß minimiert.

Der Hebelhalter kann fest mit einem Schubelement verbunden sein, wobei das Schubelement auf ein zweites Kupplungselement zwischen der Lenkspindel-Halteeinrichtung und dem Lagerbock wirkt. Das Schubelement ist in bauraumsparender Weise als Rohr gebildet, das um die Drehachse oder Welle der Lenkspindel-Halteeinrichtung angeordnet ist und das Federelement oder die Tellerfeder axial durchragt. Das Rohr durchragt bevorzugt auch den Steller.

Die Spannscheibe kann auch durch eine beliebige andere formschlüssig lösbare Verbindung als dem Bajonettverschluss an dem Zylinder des Stellers festgelegt sein.

Die Hebel weisen bevorzugt in ihrem Bereich in dem sie an der Spannscheibe und/oder an dem Kupplungselement zur Anlage sind eine Übergangskurve auf, die so geformt ist, dass sie bei der Drehung der Hebel eine solche Übertragungsfunktion für die Kraft des Federelements realisieren, dass die auf die Kupplungselemente aufgebrachte Kraft konstant ist. Die Hebel sind im gleichen Winkel zueinander an dem Hebelhalter angeordnet und drehbar an diesem gelagert. Die Kupplungselemente sind als jeweils eine Scheibe gebildet, die bauraumsparend ausgeführt sein kann, da ein ausreichender Reibschluss mit der erfindungsgemäßen Federkraft-Verteilung ermöglicht ist.

Der Steller zur Aufhebung der Klemmwirkung ist in Abhängigkeit von der Art des Kraftfahrzeugs und dessen Energiesysteme bevorzugt als kleinbauender, pneumatischer Steller im wesentlichen aus Kunststoff gebaut, wobei ein Gehäuse oder Zylinder des Stellers das Federelement und das als Rohr gebildete Schubelement radial und/oder axial umgeben.

Zur Konstanthaltung der Klemmkraft kann es zweckmäßig sein, die Hebel mit einer geschlossenen Kurve als Lagerauge an je einem Bolzen des Hebelhalters drehbar gelagert anzuordnen, wodurch eine Übergangskurve zwischen dem Federelement und den Kupplungselementen oder den Scheiben dargestellt ist.

Die verstellbare Lenkspindelanordnung eignet sich zur Anwendung in einem Nutzkraftwagen oder Personenkraftwagen.

Die Erfindung wird nun näher anhand von einem Ausführungsbeispiel und anhand der beiliegenden Zeichnungen, die folgende Darstellungen wiedergeben, beschrieben:
Fig. 1 zeigt einen Querschnitt durch eine verstellbare Lenkspindelanordnung,
Fig. 2 zeigt eine perspektivische Ansicht eines Stellers mit Hebeln und Hebelhalter der verstellbaren Lenkspindelanordnung in Fig. 1.

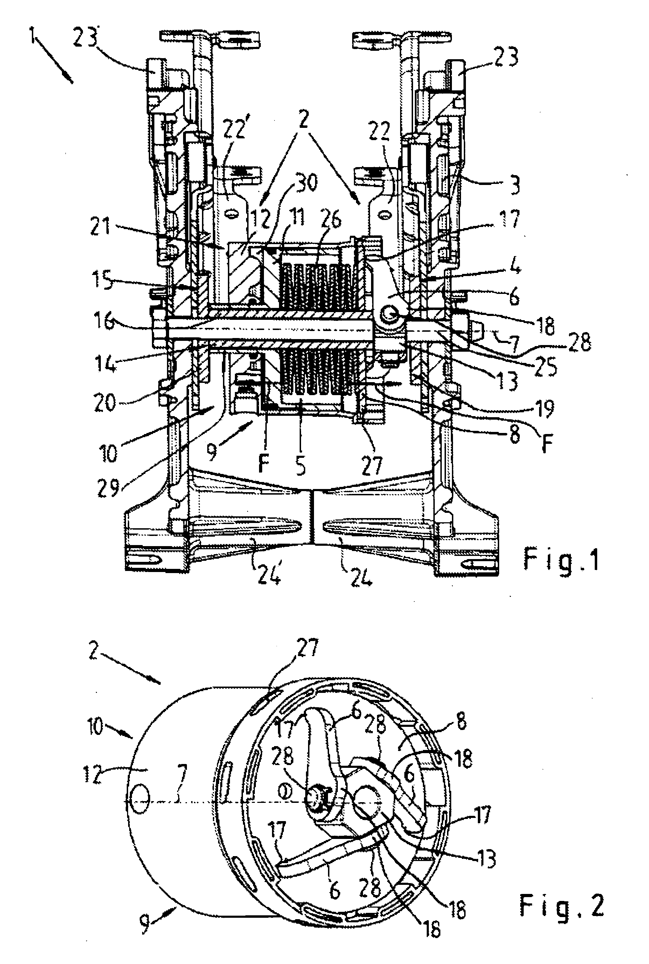

In Fig. 1 ist in einem Querschnitt entlang einer Drehachse 7 für eine Lenkspindel-Halteeinrichtung 2 eine verstellbare Lenkspindelanordnung 1 für ein Nutzkraftfahrzeug gezeigt. Die verstellbare Lenkspindelanordnung 1 dient zur Variierung der Position einer nicht gezeigten, an der Lenkspindel-Halteeinrichtung 2 festgelegten Lenkspindel, die eine Lenkhandhabe mit gelenkten Rädern des Nutzkraftwagens wirkverbindet. Die verstellbare Lenkspindelanordnung 1 ist Teil einer Hilfskraftlenkung.

Die Lenkspindel-Halteeinrichtung 2 besteht im Wesentlichen aus dieser in axialer Richtung der Drehachse 7 begrenzenden Platten 22, 22', die gleitend an jeweils einer Platte 23, 23' eines fahrzeugfesten Lagerbocks 3 anliegen. Die Platten 23, 23' des Lagerbocks 3 sind über verrippte Abstandshalter 24, 24', die einen Schraubbolzen aufnehmen, fest verbunden. Teil der Lenkspindel-Halteeinrichtung 2, die um einen Schraubbolzen 25 drehbar gelagert ist, ist ein als Tellerfeder 26 gebildetes Federelement 5, das zur Bereitstellung einer Federkraft F auf ein erstes und ein zweites Kupplungselement 4, 15 dient. Die Kupplungselemente 4, 15 sind als Kupplungsscheiben 19, 20 gebildet, deren Durchmesser geringer als der Durchmesser der Tellerfeder 26 ist. Die Kupplungsscheiben 19, 20 sind lose zwischen die Platten 22, 22', 23 und 23' gelegt oder drehfest mit je einer Platte 22, 22' der Lenkspindel-Halteeinrichtung 2 verbunden, können aber axial zu diesen Platten 22, 22' in begrenztem Umfang auf die Platten 23, 23' des fahrzeugfesten Lagerbocks 3 bewegt werden.

Die Kupplungsscheiben 19, 20 sind nicht direkt in Kontakt mit der Tellerfeder 26, vielmehr wird deren Federkraft F über drei Hebel 6 (vgl. Fig. 2), die sternförmig an einem Hebelhalter 13 drehbar angeordnet sind, verstärkt. Zur Übertragung der Federkraft F der Tellerfeder 26 dient eine Spannscheibe 8, die in axialer Richtung zwischen der Tellerfeder 26 und den Hebeln 6 angeordnet ist. Die Spannscheibe 8 ist über einen Bajonettverschluss 27 an einem Gehäuse 21 oder Zylinder 12 eines als Pneumatikzylinder 10 gebildeten Stellers 9 festgelegt.

Wie die Figuren 1 und 2 zeigen, liegen die Hebel 6 jeweils mit einer spezifisch geformten Übergangskurve 17 an der Spannscheibe 8 gleitend an. Die Hebel 6 sind an je einem Bolzen 28, die zueinander im Winkel von 120° an dem Hebelhalter 13 vorstehen, drehbar und formschlüssig lösbar gelagert. Die Hebel 6 liegen wiederum mit je einer Übergangskurve 18 an dem ersten Kupplungselement 4 oder Kupplungsscheibe 19 gleitend an.

Die Übergangskurven 17, 18 sind so geformt, dass bei zunehmender Auslenkung der Hebel 6 unter Wirkung der Federkraft F der wirksame Hebel der Hebel 6, welcher durch den Abstand des Anlagepunkts eines jeden Hebels an der Spannscheibe 8 und an der Kupplungsscheibe 19, bestimmt ist, sich vergrößert, sodass die degressive Federkennlinie der Tellerfeder 26 kompensiert ist und ein tatsächlicher, linearer Klemmkraftverlauf bei der reibschlüssigen Festlegung der Kupplungsscheiben 19, 20 an den Platten 23, 23' des Lagerbocks 3 resultiert.

Wie Fig. 1 zeigt, wird die von den Hebeln 6 verstärkte Federkraft F auf das zweite Kupplungselement 15 über ein als Rohr 16 gebildetes Schubelement 14 übertragen. Das Rohr 16 durchragt die Tellerfeder 26 mittig, axial, ebenso einen Kolben 11 und den Zylinder 12 des Pneumatikzylinders 10. Die bereits durch die Hebel 6 verstärkte Federkraft F wird von dem auf dem Rohr 16 axial aufliegenden Hebelhalter 13 auf das Rohr 16 übertragen und auf die Kupplungsscheibe 20 oder das zweite Kupplungselement 15 übertragen, das gemeinsam mit der Kupplungsscheibe 19 oder dem ersten Kupplungselement 4 gegen die Platten 23, 23' des Lagerbocks 3 gepresst wird und so die Lenkspindel-Halteeinrichtung 2 und die Lenkspindel kraftschlüssig gegenüber dem fahrzeugfesten Lagerbock 3 festlegt.

Zur Lösung dieser Klemmung zum Zwecke der Veränderung der Position der Lenkspindel und der daran festgelegten Lenkhandhabe relativ zu einem Fahrer des Nutzkraftwagens, ist der Steller 9 oder Pneumatikzylinder 10 vorgesehen.

Der Kolben 11 des Stellers 9 stützt sich über eine rohrförmige Kolbenstange 29 an dem zweiten Kupplungselement 15 ab und ist quasi fahrzeugfest in Bezug auf seine axiale Position. Wird zwischen dem Kolben 11 und dem Zylinder 12 Druckluft in den Arbeitsraum 30 gegeben, so bewegt sich der Zylinder 12 in Fig. 1 nach links, was dazu führt, dass die Spannscheibe 8 die Tellerfeder 26 entgegen ihrer Federkraft F beaufschlagt und diese staucht. Die Klemmung zwischen dem fahrzeugfesten Lagerbock 3 und der Lenkspindel-Halteeinrichtung 2 wird aufgehoben und die Lenkspindel kann zusammen mit der Lenkspindel-Halteeinrichtung 2 relativ zum Fahrzeug verschoben und/oder geschwenkt werden.

Durch die Verlagerung der große Klemmkräfte aufnehmenden Teile auf den Hebelhalter 13, die Hebel 6 und das Rohr 16 können der Zylinder 12 und der Kolben 11 des Stellers 9 aus Kunststoff gebildet sein.

## Patentansprüche

1. Verstellbare Lenkspindelanordnung für ein Fahrzeug, mit einer Lenkspindel-Halteeinrichtung (2) zur Aufnahme einer Lenkspindel, und mit einem fahrzeugfesten Lagerbock (3) gegenüber dem die Position der Lenkspindel-Halteeinrichtung (2) und/oder der Lenkspindel veränderbar ist, wobei die Lenkspindel-Halteeinrichtung (2) durch eine auf ein erstes Kupplungselement (4) zwischen der Lenkspindel-Halteeinrichtung (2) und dem Lagerbock (3) wirkenden Kraft (F) eines Federelementes (5) an dem Lagerbock (3) gehalten ist, wobei die Kraft (F) des Federelementes (5) durch einen zwischen dem Federelement (5) und dem ersten Kupplungselement (4) angeordneten, drehbar gelagerten Hebel (6) übersetzt ist, wobei das Federelement (5) um eine Drehachse (7) der Lenkspindel-Halteeinrichtung (2) oder der Lenkspindel angeordnet ist und wobei der Hebel (6) in axialer Richtung zu der Drehachse (7) an dem Federelement (5) angeordnet ist, **dadurch gekennzeichnet, dass**
die verstellbare Lenkspindelanordnung (1) zwei oder mehrere, parallel oder in Reihe geschaltete, drehbare Hebel (6) aufweist.

2. Verstellbare Lenkspindelanordnung nach Anspruch 1, **dadurch gekennzeichnet, dass** die Hebel (6) die Kraft (F) des Federelementes (5) ungleichförmig übersetzen.

3. Verstellbare Lenkspindelanordnung nach einem der Ansprüche 1 bis 2, **dadurch gekennzeichnet, dass** zwischen dem Federelement (5) und den Hebeln (6) eine Spannscheibe (8) angeordnet ist.

4. Verstellbare Lenkspindelanordnung nach Anspruch 3, **dadurch gekennzeichnet, dass** die Spannscheibe (8) von einem Steller (9) gegen die Kraft (F) des Federelementes (5) bewegbar ist.

5. Verstellbare Lenkspindelanordnung nach Anspruch 4, **dadurch gekennzeichnet, dass** der Steller (9) ein Pneumatikzylinder (10) ist, dessen Kolben (11) oder Zylinder (12) auf die Spannscheibe (8) wirkt.

6. Verstellbare Lenkspindelanordnung nach einem der Ansprüche 1 bis 5, **dadurch gekennzeichnet, dass** die Hebel (6) an einem Hebelhalter (13) gelagert sind.

7. Verstellbare Lenkspindelanordnung nach einem der Ansprüche 1 bis 6, **dadurch gekennzeichnet, dass** der Hebelhalter (13) relativ zu der Spannscheibe (8) drehbar ist.

8. Verstellbare Lenkspindelanordnung nach Anspruch 7, **dadurch gekennzeichnet, dass** der Hebelhalter (13) über ein Schubelement (14) auf ein zweites Kupplungselement (15) wirkt.

9. Verstellbare Lenkspindelanordnung nach Anspruch 8, **dadurch gekennzeichnet, dass** das Schubelement (14) ein Rohr (16) ist, das das Federelement (5) axial durchragt.

10. Verstellbare Lenkspindelanordnung nach Anspruch 9, **dadurch gekennzeichnet, dass** das Rohr (16) den Steller (9) axial durchragt und koaxial zu der Drehachse (7) für die Lenkspindel-Halteeinrichtung (2) angeordnet ist.

11. Verstellbare Lenkspindelanordnung nach einem der Ansprüche 5 bis 10, **dadurch gekennzeichnet, dass** die Spannscheibe (8) formschlüssig lösbar an dem Zylinder (12) des Stellers (9) festgelegt ist.

12. Verstellbare Lenkspindelanordnung nach einem der Ansprüche 1 bis 11, **dadurch gekennzeichnet, dass** die Hebel (6) eine Übergangskurve (17) zu der Spannscheibe (8) und/oder eine Übergangskurve (18) zu dem ersten und/oder zweiten Kupplungselement (4,15) aufweise mit Hilfe derer eine Übertragungsfunktion für eine Federweg-abhängige, konstante Federkraft (F) des Federelementes (5) ermöglicht ist.

13. Verstellbare Lenkspindelanordnung nach einem der Ansprüche 6 bis 12, **dadurch gekennzeichnet, dass** die Hebel (6) in gleichem Winkel zueinander von dem Hebelhalter (13) abragen.

14. Verstellbare Lenkspindelanordnung nach einem der Ansprüche 1 bis 13, **dadurch gekennzeichnet, dass** die Kupplungselemente (4, 15) Scheiben (19, 20) sind.

15. Verstellbare Lenkspindelanordnung nach einem der Ansprüche 5 bis 14, **dadurch gekennzeichnet, dass** der Steller (9) ein pneumatischer Steller ist.

16. Verstellbare Lenkspindelanordnung nach einem der Ansprüche 5 bis 15, **dadurch gekennzeichnet, dass** der Steller (9) aus Kunststoff gebildet ist.

17. Verstellbare Lenkspindelanordnung nach einem der Ansprüche 5 bis 16, **dadurch gekennzeichnet, dass** ein Gehäuse (21) oder Zylinder (12) des Stellers (9) das Federelement (5) und das Rohr (16) radial und/oder axial umgeben.

18. Verstellbare Lenkspindelanordnung nach einem der Ansprüche 1 bis 17, **dadurch gekennzeichnet, dass** die Hebel (6) jeweils in einer geschlossenen Kurve drehbar in dem Hebelhalter (13) angeordnet sind.

19. Verstellbare Lenkspindelanordnung nach einem der Ansprüche 1 bis 18, **dadurch gekennzeichnet, dass** die verstellbare Lenkspindelanordnung (1) in einem Nutzkraftwagen oder Personenkraftwagen eingebaut ist.

## Claims

1. Adjustable steering-spindle arrangement for a vehicle, having a steering-spindle holding device (2) for receiving a steering spindle, and having a bearing block (3) which is fixed to the vehicle and with respect to which the position of the steering-spindle holding device (2) and/or the steering spindle can be changed, the steering-spindle holding device (2) being held on the bearing block (3) by a force (F) of a spring element (5), which force (F) acts on a first coupling element (4) between the steering-spindle holding device (2) and the bearing block (3), the force (F) of the spring element (5) being transmitted by a rotatably mounted lever (6) which is arranged between the spring element (5) and the first coupling element (4), the spring element (5) being arranged around a rotational axis (7) of the steering-spindle holding device (2) or the steering spindle, and the lever (6) being arranged on the spring element (5) in the axial direction with respect to the rotational axis (7), **characterized in that** the adjustable steering-spindle arrangement (1) has two or more rotatable levers (6) which are connected in parallel or in series.

2. Adjustable steering-spindle arrangement according to Claim 1, **characterized in that** the levers (6) transmit the force (F) of the spring element (5) in a non-uniform manner.

3. Adjustable steering-spindle arrangement according to either of Claims 1 and 2, **characterized in that** a clamping disc (8) is arranged between the spring element (5) and the levers (6).

4. Adjustable steering-spindle arrangement according to Claim 3, **characterized in that** the clamping disc (8) can be moved by an actuating element (9) counter to the force (F) of the spring element (5).

5. Adjustable steering-spindle arrangement according to Claim 4, **characterized in that** the actuating element (9) is a pneumatic cylinder (10), the piston (11) or cylinder (12) of which acts on the clamping disc (8).

6. Adjustable steering-spindle arrangement according to one of Claims 1 to 5, **characterized in that** the levers (6) are mounted on a lever holder (13).

7. Adjustable steering-spindle arrangement according to one of Claims 1 to 6, **characterized in that** the lever holder (13) can be rotated relative to the clamping disc (8).

8. Adjustable steering-spindle arrangement according to Claim 7, **characterized in that** the lever holder (13) acts on a second coupling element (15) via a thrust element (14).

9. Adjustable steering-spindle arrangement according to Claim 8, **characterized in that** the thrust element (14) is a tube (16) which penetrates the spring element (5) axially.

10. Adjustable steering-spindle arrangement according to Claim 9, **characterized in that** the tube (16) penetrates the actuating element (9) axially and is arranged coaxially with respect to the rotational axis (7) for the steering-spindle holding device (2).

11. Adjustable steering-spindle arrangement according to one of Claims 5 to 10, **characterized in that** the clamping disc (8) is releasably fixed to the cylinder (12) of the actuating element (9) in a positively locking manner.

12. Adjustable steering-spindle arrangement according to one of Claims 1 to 11, **characterized in that** the levers (6) have a transitional curve (17) to the clamping disc (8) and/or a transitional curve (18) to the first and/or second coupling element (4, 15), with the aid of which transitional curves (17, 18) a transmission function is made possible for a spring-travel-dependent, constant spring force (F) of the spring element (5).

13. Adjustable steering-spindle arrangement according to one of Claims 6 to 12, **characterized in that** the levers (6) protrude from the lever holder (13) at an identical angle with respect to one another.

14. Adjustable steering-spindle arrangement according to one of Claims 1 to 13, **characterized in that** the coupling elements (4, 15) are discs (19, 20).

15. Adjustable steering-spindle arrangement according to one of Claims 5 to 14, **characterized in that** the actuating element (9) is a pneumatic actuating element.

16. Adjustable steering-spindle arrangement according to one of Claims 5 to 15, **characterized in that** the actuating element (9) is formed from plastic.

17. Adjustable steering-spindle arrangement according to one of Claims 5 to 16, **characterized in that** a housing (21) or cylinder (12) of the actuating element (9) surround the spring element (5) and the tube (16) radially and/or axially.

18. Adjustable steering-spindle arrangement according to one of Claims 1 to 17, **characterized in that** the levers (6) are arranged in the lever holder (13) such that they can be rotated in each case in a closed curve.

19. Adjustable steering-spindle arrangement according to one of Claims 1 to 18, **characterized in that** the adjustable steering-spindle arrangement (1) is installed in a commercial vehicle or passenger car.

## Revendications

1. Agencement d'arbre de direction réglable pour un véhicule, avec un dispositif d'arrêt d'arbre de direction (2) pour loger un arbre de direction, et avec un support de palier (3) fixé au véhicule par rapport auquel la position du dispositif d'arrêt d'arbre de direction (2) et/ou de l'arbre de direction est modifiable, le dispositif d'arrêt d'arbre de direction (2) étant maintenu contre le support de palier (3) au moyen de la force (F) d'un élément de ressort (5) agissant sur un premier élément d'embrayage (4) positionné entre le dispositif d'arrêt d'arbre de direction (2) et le support de palier (3), la force (F) de l'élément de ressort (5) étant transmise par un levier (6) disposé de façon tournante entre l'élément de ressort (5) et le premier élément d'embrayage (4), l'élément de ressort (5) étant disposé autour d'un axe de rotation (7) du dispositif d'arrêt d'arbre de direction (2) ou de l'arbre de direction et le levier (6) étant disposé contre l'élément de ressort (5) dans la direction axiale par rapport à l'axe de rotation (7), **caractérisé en ce que** l'agencement d'arbre de direction réglable (1) comporte au moins deux leviers (6) tournants disposés en série.

2. Agencement d'arbre de direction réglable selon la revendication 1, **caractérisé en ce que** les leviers (6) transmettent la force (F) de l'élément de ressort (5) de façon irrégulière.

3. Agencement d'arbre de direction réglable selon l'une quelconque des revendications 1 à 2, **caractérisé en ce qu'**un disque de serrage (8) est disposé entre l'élément de ressort (5) et les leviers (6).

4. Agencement d'arbre de direction réglable selon la revendication 3, **caractérisé en ce que** le disque de serrage (8) peut être déplacé contre la force (F) de l'élément de ressort (5) à l'aide d'un dispositif de réglage (9).

5. Agencement d'arbre de direction réglable selon la revendication 4, **caractérisé en ce que** le dispositif de réglage (9) est un vérin pneumatique (10) dont le piston (11) ou vérin (12) agit sur le disque de serrage (8).

6. Agencement d'arbre de direction réglable selon l'une quelconque des revendications 1 à 5, **caractérisé en ce que** les leviers (6) sont disposés au niveau d'un commutateur de levier (13).

7. Agencement d'arbre de direction réglable selon l'une quelconque des revendications 1 à 6, **caractérisé en ce que** le commutateur de levier (13) peut tourner par rapport au disque de serrage (8).

8. Agencement d'arbre de direction réglable selon la revendication 7, **caractérisé en ce que** le commutateur de levier (13) agit sur un deuxième élément d'embrayage (15) par l'intermédiaire d'un élément de poussée (14).

9. Agencement d'arbre de direction réglable selon la revendication 8, **caractérisé en ce que** l'élément de poussée (14) est un tube (16) qui traverse axialement l'élément de ressort (5).

10. Agencement d'arbre de direction réglable selon la revendication 9, **caractérisé en ce que** le tube (16) traverse axialement le dispositif de réglage (9) et est disposé coaxialement par rapport à l'axe de rotation (7) pour le dispositif d'arrêt d'arbre de direction (2).

11. Agencement d'arbre de direction réglable selon l'une quelconque des revendications 5 à 10, **caractérisé en ce que** le disque de serrage (8) est fixé de façon amovible au vérin (12) du dispositif de réglage (9) par complémentarité de formes.

12. Agencement d'arbre de direction réglable selon l'une quelconque des revendications 1 à 11, **caractérisé en ce que** les leviers (6) comportent une courbe transitoire (17) par rapport au disque de serrage (8) et/ou une courbe transitoire (18) par rapport au premier et/ou au deuxième élément d'embrayage (4, 15) à l'aide de laquelle une fonction de transmission est autorisée pour une force élastique (F) constante de l'élément de ressort (5), en fonction de la trajectoire du ressort.

13. Agencement d'arbre de direction réglable selon l'une quelconque des revendications 6 à 12, **caractérisé en ce que** les leviers (6) ressortent du commutateur de levier (13) suivant un angle identique.

14. Agencement d'arbre de direction réglable selon l'une quelconque des revendications 1 à 13, **caractérisé en ce que** les éléments d'embrayage (4, 15) sont des disques (19, 20).

15. Agencement d'arbre de direction réglable selon l'une quelconque des revendications 5 à 14, **caractérisé en ce que** le dispositif de réglage (9) est un dispositif de réglage pneumatique.

16. Agencement d'arbre de direction réglable selon l'une quelconque des revendications 5 à 15, **caractérisé en ce que** le dispositif de réglage (9) est réalisé en matière synthétique.

17. Agencement d'arbre de direction réglable selon l'une quelconque des revendications 5 à 16, **caractérisé en ce qu'**un boîtier (21) ou vérin (12) du dispositif de réglage (9) entoure axialement et/ou radialement l'élément de ressort (5) et le tube (16).

18. Agencement d'arbre de direction réglable selon l'une quelconque des revendications 1 à 17, **caractérisé en ce que** les leviers (6) sont disposés respectivement dans une courbe fermée de façon à pouvoir tourner dans le commutateur de levier (13).

19. Agencement d'arbre de direction réglable selon l'une quelconque des revendications 1 à 18, **caractérisé en ce que** l'agencement d'arbre de direction réglable (1) est monté dans un véhicule utilitaire ou dans un véhicule de tourisme.
